# EUROPÄISCHE PATENTANMELDUNG

(11) **EP 0 529 473 A1**
(43) Veröffentlichungstag der Anmeldung: **03.03.1993**
(21) Anmeldenummer: 92114037.2
(22) Anmeldetag: 18.08.1992
(51) Int. Cl.: C05G 3/08, C05G 5/00

(54) **Ammonium- oder harnstoffhaltige Düngemittel und Verfahren zu ihrer Herstellung**

(30) Priorität: 30.08.1991 DE 4128828
(71) Anmelder: BASF Aktiengesellschaft, D-67063 Ludwigshafen (DE)
(72) Erfinder: Engelhardt, Karl, Dr., W-6703 Limburgerhof (DE); Dittmar, Heinrich, Dr., W-6700 Ludwigshafen (DE); Luther, Siegfried, W-6730 Neustadt (DE)

(57) **Zusammenfassung**

Ammonium- oder harnstoffhaltige, mit einem Nitrifikationsinhibitor versehene Düngemittel sowie Verfahren zur Herstellung von ammonium- oder harnstoffhaltigen Düngemitteln, bei dem die Düngemittel mit einem Salz aus 3-Methylpyrazol und einer Säure haftfest überzogen werden.

## Beschreibung

Die vorliegende Erfindung betrifft ammonium- oder harnstoffhaltige, mit einem Nitrifikationsinhibitor versehene Düngemittel und ein Verfahren zur Herstellung von ammonium- oder harnstoffhaltigen, mit einem Nitrifikationsinhibitor haftfest überzogenen Düngemitteln.

Es ist bekannt, daß ammoniumhaltige Stickstoffdüngemittel im Boden durch Bakterien zu Nitrit und Nitrat umgewandelt werden. Diese Nitrifikation findet besonders in gut durchlüfteten, neutral bis alkalisch reagierenden Böden verhältnismäßig rasch statt. Wegen seiner großen Beweglichkeit im Boden ist der Nitratstickstoff insbesondere in Gebieten mit hohen Niederschlagsmengen ständig von Auswaschungsverlusten bedroht. Es ist bekannt, zur Verlangsamung der Nitrifikation den ammoniumhaltigen Düngemitteln Nitrifikationsinhibitoren zuzusetzen. Diese Verbindungen können schon in geringen Konzentrationen die Wirkung der im Boden vorhandenen nitrifizierenden Bakterien verlangsamen, so daß das im Boden verhältnismäßig gut haftende Ammonium nur langsam in das zwar von den Pflanzen gut aufnehmbare aber auch leicht auswaschbare Nitration umgewandelt wird. Solche Nitrifikationsinhibitoren enthaltende Stickstoffdüngemittel zeichnen sich demzufolge durch eine verzögerte Stickstoffzulieferung aus.

Als Nitrifikationsinhibitoren sind bereits eine Reihe von Verbindungen beschrieben worden.

Aus der französischen Patentschrift 1 232 366 ist z.B. die nitrifikationshemmende Wirkung von Dicyandiamid bekannt. Das Dicyandiamid kann dem Düngemittel bei dessen Herstellung oder nach der Formgebung (Granulation oder Kompaktion) zugesetzt werden. Im ersteren Fall erhält man ein Düngemittelkorn, in dem das Dicyandiamid gleichmäßig verteilt, während im letzten Fall das Dicyandiamid nur auf der Oberfläche des Korns vorliegt.

Wichtig ist jedenfalls, daß der Nitrifikationsinhibitor fest mit dem Düngemittel verbunden ist.

Bei der Einbringung des Nitrifikationsinhibitors in das Düngemittel vor der Granulation entsteht zwar ein inniges Gemisch, es läßt sich jedoch nicht vermeiden, daß es bei den üblichen Temperaturen von 100 bis 140°C in der Schmelze und bei der Granulation in Verbindung mit den relativ langen mittleren Verweilzeiten bei diesen Temperaturen von mindestens 30 Minuten zu Zersetzungen des Nitrifikationsinhibitors kommen kann.

Die Aufbringung des Nitrifikationsinhibitors auf die fertig granulierten Düngemittel hat den Nachteil, daß der Nitrifikationsinhibitor nicht fest auf der Oberfläche haftet und bei der Handhabung des Düngemittels zu lästigem Abrieb und Stauben führt. In der DE-OS 36 01 805 und der DE-OS 25 31 962 sind daher Verfahren beschrieben, um Dicyandiamid mit bestimmten zusätzlichen Haftvermittlern auf die Oberfläche von ammoniumhaltigen Düngemitteln aufzubringen.

Aus den DD-Patentschriften 222 471 und 247 894 ist es bekannt, daß auch Pyrazol-Derivate als Nitrifikationsinhibitoren geeignet sind. Es hat sich gezeigt, daß diese Verbindungen eine höhere Wirksamkeit aufweisen als Dicyandiamid. Es wäre daher von Vorteil, diese Verbindungen und aus dieser Gruppe insbesondere das 3-Methylpyrazol anstelle von Dicyandiamid einzusetzen und es aus den obengenannten Gründen auf das Düngemittel aufzubringen. Das flüssige 3-Methylpyrazol (Fp.: -55°C) weist allerdings eine so hohe Flüchtigkeit auf, daß sich sogar beim Aufbringen bei einer Temperatur von 60°C bis 100°C und auch bei der Lagerung des damit beschichteten Düngemittels merkliche Anteile des 3-Methylpyrazols verflüchtigen, was zu Verlusten an Wirkstoff, aber auch zu Beeinträchtigungen der Umwelt führt.

Das ebenfalls als Nitrifikationsinhibitor beschriebene 1-Carbamoyl-3-methylpyrazol (DE-PS 27 45 833) ist zwar nicht so flüchtig, neigt jedoch zur Sublimation und ist außerdem aufwendiger herzustellen.

Aus der US 3 635 690 sind Salze des 3-Methylpyrazols bekannt, die mit den Düngemitteln vermischt werden. Bei der Herstellung dieser Gemische zeigt sich, daß es, wenn die Salze mit den Düngemitteln bereits bei deren Herstellung vermischt werden, immer noch zu deutlichen Verlusten an 3-Methylpyrazol kommt. Wenn die Salze jedoch den fertigen Düngemitteln zugemischt werden, ist die Haftung zwischen Düngemitteln und Salzen ungenügend.

Aus den US-Patenten 4 522 642 und 4 523 940 und der DD 230 523 sind schließlich Metallsalze und Metallkomplexe u.a. des 3-Methylpyrazols bekannt. Diese Metallsalze bzw. Komplexe sind jedoch zum Teil ebenfalls relativ flüchtig.

Der vorliegenden Erfindung lag daher die Aufgabe zugrunde, ammonium- oder harnstoffhaltige, mit einem Nitrifikationsinhibitor versehene Düngemittel sowie ein einfach durchzuführendes Verfahren zur Herstellung eines mit einem hochwirksamen Nitrifikationsinhibitor haftfest beschichteten ammonium- oder harnstoffhaltigen Düngemittels zur Verfügung zu stellen, ohne daß sich merkliche Mengen des Nitrifikationsinhibitors verflüchtigen.

Es wurde gefunden, daß diese Aufgabe mit einem Verfahren zur Herstellung von ammonium- oder harnstoffhaltigen Düngemitteln gelöst werden kann, das dadurch gekennzeichnet ist, daß man auf die Oberfläche des Düngemittels ein Salz aus 3-Methylpyrazol und einer Säure aufbringt und dort fixiert.

Die Aufbringung des Salzes des 3-Methylpyrazols führt überraschenderweise zu einem haftfesten, nicht staubenden, lagerbeständigen Überzug mit dem Nitrifikationsinhibitor.

Gegenstand der Erfindung sind daher auch ammonium- oder harnstoffhaltige, mit einem Nitrifikationsinhibitor versehene Düngemittel, die dadurch gekennzeichnet sind, daß auf der Oberfläche der Düngemittel ein Salz aus 3-Methylpyrazol und einer Säure als Nitrifikationsinhibitor aufgebracht und fixiert ist.

Als Düngemittel können alle bekannten ammonium- oder harnstoffhaltigen Düngemittel eingesetzt werden. Insbesondere zu nennen sind in diesem Zusammenhang die NPKDünger, d.h. Düngemittel, die Stickstoff, Phosphor und Kalium enthalten, Kalkammonsalpeter, d.h. Düngemittel, die noch Ca enthalten, Ammonsulfatsalpeter (allgemeine Formel (NH₄)₂SO₄.NH₄NO₃), Ammonphosphat und Ammonsulfat. Auch Harnstoff ist einsetzbar, die ammoniumhaltigen Düngemittel sind jedoch bevorzugt. Diese Düngemittel sind dem Fachmann allgemein bekannt (siehe z.B. Ullmann's Encyclopedia of Industrial Chemistry, 5. edition, Vol. A 10, 323-431, Verlagsgesellschaft, Weinheim, 1987). Die Düngemittel können auch noch weitere Nährstoffe enthalten, wie etwa Magnesium oder Spurennährstoffe.

Die Düngemittel liegen bei der Beschichtung in Granulat- oder Kompaktatform vor, bevorzugt ist das Aufbringen auf Düngemittelgranulat. Ullmann's Encyclopedia zeigt das Schema eines Granulationsprozesses (aaO, S. 378). Die Aufbringung des Salzes des 3-Methylpyrazols erfolgt in einem derartigen Prozess nach dem Granulieren z.B. in einer Kühltrommel.

Mit dem Salz des 3-Methylpyrazols zusammen können gegebenenfalls noch andere Nitrifikationsinhibitoren, z.B. Dicyandiamid, aufgebracht werden, da diese Kombinationen für bestimmte Anwendungen einen synergistischen Effekt aufweisen (siehe DD-PS 222 471).

Als Salze des 3-Methylpyrazols kommen bevorzugt Salze von Mineralsäuren in Frage. Besonders geeignet sind die Nitrate und die Phosphate, insbesondere das Salz, bestehend aus einem Mol 3-Methylpyrazol und einem Mol Phosphorsäure, entweder als festes Salz oder in wäßriger Lösung. Die Salze dieser Säuren üben einen zusätzlichen düngewirksamen Effekt aus. Auch die Chloride bzw. Sulfate sind einsetzbar, Salze organischer Säuren können ebenfalls aufgebracht werden, z.B. die Acetate oder Oxalate. Als Säure kann auch die sogenannte NP-Säure verwendet werden, die Phosphorsäure und Salpetersäure enthält und beim Aufschluß von Rohphosphaten mit Salpetersäure (Odda-Prozess) entsteht.

Die Aufbringung erfolgt in bevorzugter Weise in Form der wäßrigen Lösungen der Salze, wobei möglichst konzentrierte Lösungen eingesetzt werden sollten, da dann die Entfernung des Wassers am wenigsten aufwendig ist oder entfallen kann. Es ist aber auch möglich, die Salze in Form einer Suspension in einem organischen Lösungsmittel, in Öl oder in Wachsschmelze dispergiert aufzubringen oder sie nach Benetzung der Düngemittelteilchen mit einer Flüssigkeit (z.B. Nährsalzlösung, Wasser, Öl oder Wachsschmelze) in Pulverform auf die benetzte Oberfläche haftfest aufzubringen.

Wenn die Salze in Form einer Lösung aufgebracht werden, geschieht dies beispielsweise mittels einer üblichen Sprühvorrichtung, es ist aber auch möglich, die Salzlösung in eine Mischvorrichtung (z.B. einer Mischtrommel) zu dem vorgelegten Düngemittel zulaufen zu lassen. Dabei kann sowohl eine erwärmte Salzlösung als auch eine Salzlösung von 20 - 25°C auf ein bei Raumtemperatur befindliches Düngemittelgranulat oder ein erwärmtes Düngemittelgranulat aufgebracht werden.

Nach der Zugabe der Lösung oder Suspension des Salzes des 3-Methylpyrazols wird das Lösungsmittel verdampft, wobei ein haftfester, fixierter Überzug des Nitrifikationsinhibitors gebildet wird. Für eine wirksame Aufbringung sind 2 - 10 l Salzlösung pro Tonne Düngemittel erforderlich. Das beschichtete Düngemittel enthält letztlich 0,1 - 0,3 Gew.-% an Salz des 3-Methylpyrazols.

Nach dem Aufbringen und Fixieren der 3-Methylpyrazol-Salze wird das Düngemittel wie üblich weiter verarbeitet. Die erfindungsgemäßen ammonium-oder harnstoffhaltigen Düngemittel besitzen glatte und abriebarme Oberflächen.

Nach dem Aufbringen und Fixieren des Salzes kann, z.B. in derselben Mischtrommel, zusätzlich noch ein Wachs aufgebracht werden. Damit erreicht man einen wirksamen "Einschluß" des Nitrifikationsinhibitors auch bei längerer Lagerung unter möglicherweise ungünstigen Bedingungen. Das Wachs wirkt als zusätzlicher Schutz gegen eine Verflüchtigung des Nitrifikationsinhibitors.

### Beispiele

### Beispiel 1

In einem Mischer wurden 20 kg granulierter Ammoniumsulfatsalpeter (ASS) vorgelegt. 88 g 3-Methylpyrazolmonophosphat wurden in 200 ml Wasser unter Erwärmen gelöst und die 60°C warme Salzlösung wurde mittels einer Sprühvorrichtung (Sprühpistole) auf den ASS, der eine Temperatur von 28°C aufwies, aufgebracht.

Das besprühte ASS-Granulat wurde im laufenden Mischer auf 40°C erwärmt und bei dieser Temperatur 5 Minuten weitergerollt. Dabei erfolgte ein oberflächliches Antrocknen, wobei das Salz fixiert wurde.

Anschließend wurden 60 g warmes Paraffinwachs (Smp. 40 - 42°C, Wintershalltyp "Paraffin 40/42 P144") auf das beschichtete Granulat aufgedüst. Nach 1 - 2 Minuten Nachrollen erhält man ein haftfest beschichtetes ASS-Düngemittelgranulat.

### Beispiel 2

Analog der Verfahrensweise gemäß Beispiel 1 wurde auf 20 kg ASS eine Lösung von 65 g 3-Methylpyrazolnitrat in 180 ml Wasser aufgebracht. Man erhielt ein haftfest beschichtetes ASS-Granulat. Auch dieses Granulat kann zusätzlich mit Wachs beschichtet werden.

## Patentansprüche

1. Ammonium- oder harnstoffhaltige, mit einem Nitrifikationsinhibitor versehene Düngemittel, dadurch gekennzeichnet, daß auf der Oberfläche der Düngemittel ein Salz aus 3-Methylpyrazol und einer Säure als Nitrifikationsinhibitor aufgebracht und fixiert ist.

2. Düngemittel nach Anspruch 1, dadurch gekennzeichnet, daß es sich bei den Düngemitteln um Granulate handelt.

3. Düngemittel nach Anspruch 1, dadurch gekennzeichnet, daß sie zusätzlich noch mit Wachs oder Öl versiegelt sind.

4. Verfahren zur Herstellung von ammonium- oder harnstoffhaltigen Düngemitteln, dadurch gekennzeichnet, daß man auf die Oberfläche des Düngemittels ein Salz aus 3-Methylpyrazol und einer Säure aufbringt und dort fixiert.

5. Verfahren nach Anspruch 4, dadurch gekennzeichnet, daß man das Salz auf ein Düngemittelgranulat aufbringt.

6. Verfahren nach Anspruch 4, dadurch gekennzeichnet, daß man das Salz in Form einer wäßrigen Lösung aufbringt.

7. Verfahren nach Anspruch 4, dadurch gekennzeichnet, daß man ein Salz einer Mineralsäure einsetzt.

8. Verfahren nach Anspruch 7, dadurch gekennzeichnet, daß man als Mineralsäure Salpetersäure und/oder Phosphorsäure einsetzt.

9. Verfahren nach Anspruch 4, dadurch gekennzeichnet, daß man als ammoniumhaltige Düngemittel NPK-Düngemittel, Kalkammonsalpeter, Ammonsulfatsalpeter, Ammoniumsulfat oder Ammonphosphat einsetzt.

10. Verfahren nach Anspruch 4, dadurch gekennzeichnet, daß man das Granulat oder Kompaktat nach dem Aufbringen und Fixieren des Salzes mit Wachs oder Öl versiegelt.
